# FASCICULE DE BREVET EUROPEEN

(11) **EP 1 453 635 B1**
(45) Date de publication et mention de la délivrance du brevet: **22.03.2006**
(21) Numéro de dépôt: 02800626.0
(22) Date de dépôt: 03.10.2002
(51) Int. Cl.: B23K 26/073, B23K 26/14

(54) **PROCEDE ET DISPOSITIF DE DECOUPE LASER**
LASERSCHNEIDVERFAHREN UND -VORRICHTUNG
LASER CUTTING METHOD AND DEVICE

(30) Priorité: 05.10.2001 FR 0112831
(43) Date de publication de la demande: 08.09.2004
(73) Titulaire: COMMISSARIAT A L'ENERGIE ATOMIQUE, 75752 Paris Cédex 15 (FR)
(72) Inventeur: ALFILLE, Jean-Pascal, F-21000 Dijon (FR)
(74) Mandataire: Poulin, Gérard
(86) Numéro de dépôt international: PCT/FR2002/003368
(87) Numéro de publication internationale: WO 2003/031109

(56) Documents cités:
- EP-A- 0 458 180
- US-A- 5 059 256
- US-A- 5 578 228
- US-A1- 2001 003 697
- PATENT ABSTRACTS OF JAPAN vol. 2000, no. 11, 3 janvier 2001 (2001-01-03) -& JP 2000 210785 A (MITSUBISHI HEAVY IND LTD), 2 août 2000 (2000-08-02)
- BÖHME ET AL: "Handbuch der Schweissverfahren, Teil 2" , HANDBUCH DER SCHWEISSVERFAHREN, XX, XX, PAGE(S) 174-175 XP002206753 page 174, ligne 8 -page 175, ligne 11; figures 2-101 page 176, ligne 7-13

## Description

### DOMAINE TECHNIQUE

Le domaine technique de l'invention est celui des procédés de découpe industrielle par laser de puissance.

Plus spécifiquement, le domaine technique de l'invention se rapporte aux procédés de découpe laser aptes à découper des matériaux d'épaisseur importante, notamment des matériaux utilisés dans des installations de l'industrie nucléaire ou de l'industrie navale.

### ETAT DE LA TECHNIQUE ANTERIEURE

Dans ce domaine, plusieurs réalisations ont déjà été proposées comme US 2001 003 697 A, qui est considéré comme représentant l'état de la technique le plus proche.

On connaît des dispositifs de découpe laser comprenant une tête dans laquelle se trouvent des moyens optiques aptes à être traversés par un faisceau laser. Dans ce type de dispositif, la tête se prolonge par une buse comprenant un orifice de sortie au travers lequel passe le faisceau laser pour découper une pièce en formant une saignée, ainsi qu'un flux de gaz de travail afin d'évacuer les particules métalliques hors de la saignée. Selon l'état de la technique, de fortes pressions de l'ordre de 10 à 20 bars sont requises pour ce gaz de travail, notamment dans le but d'effectuer efficacement l'éjection de ces particules métalliques hors de la saignée.

Le tache focale du faisceau laser est préférablement placée à environ un tiers de l'épaisseur totale de la pièce à découper, ce paramètre étant connu de l'art antérieur pour obtenir une découpe de bonne qualité.

De manière générale, les dispositifs de découpe laser comprennent des buses dont le profil interne est spécial, la forme de ces buses répondant à un besoin d'optimiser la forme d'un jet et d'en accroître l'énergie cinétique.

Selon l'art antérieur, la tache focale émanant du faisceau laser du dispositif doit être de petit diamètre de l'ordre de 0,5 mm, afin de former la saignée la plus étroite possible, la largeur de la saignée étant sensiblement égale au diamètre de la tache focale.

Cependant, lorsque l'on utilise de tels dispositifs pour découper des pièces de grande épaisseur, on rencontre des problèmes faisant apparaître des défauts de découpe. En effet, lorsque l'épaisseur de la pièce est supérieure à 10 mm et plus particulièrement lorsque cette épaisseur dépasse les 50 mm pour atteindre une valeur pouvant aller au-delà de 100 mm, on assiste à la subsistance de points d'attaches entre les parties de la pièce à dissocier.

### EXPOSÉ DE L'INVENTION

Le but de la présente invention est donc de remédier au moins partiellement aux inconvénients cités ci-dessus, en proposant un procédé de découpe laser assurant une qualité de découpe supérieure à celle rencontrée dans l'art antérieur et/ou une vitesse de découpe accrue, notamment pour des pièces d'épaisseur importante.

Pour ce faire, l'invention a tout d'abord pour objet un procédé de découpe laser selon la revendication indépendante.

Le fait de combiner une tache focale de diamètre compris entre environ 1,5 et 3 mm et une pression de gaz de travail comprise entre environ 1 et 3 bars permet d'améliorer considérablement la qualité et la vitesse de découpe par rapport aux réalisations proposées dans l'art antérieur, notamment lors de la découpe de pièces de fortes épaisseurs, typiquement supérieures à 50 mm.

En effet, il est précisé que de façon générale, de fortes pressions de gaz sont utilisées afin que les particules métalliques en fusion soient éjectées le mieux possible hors de la saignée, en traversant cette dernière depuis une surface supérieure jusqu'à une surface inférieure de la pièce. Cependant, il a été observé qu'en utilisant de telles pressions, un effet de refroidissement conséquent se produisait sur la goutte de métal, en raison de sa forte exposition au flux gazeux. De plus, il a été constaté que l'effet de refroidissement provoqué par la pression élevée du flux de gaz de travail pouvait atteindre une importance telle que l'irradiation laser procurée par le faisceau laser n'était alors plus en mesure de maintenir la goutte de métal liquide pendant l'intégralité de la traversée de la saignée.

De cette façon, contrairement au préjugé technique existant décrit ci-dessus visant à mettre en oeuvre des pressions de gaz importantes pour obtenir une énergie cinétique du gaz élevée et donc une bonne expulsion des particules hors de la saignée, il s'est avéré que ces fortes pressions pouvaient provoquer un effet inverse se concrétisant par un blocage de la progression de la découpe.

Ainsi, en prévoyant une pression du gaz de travail comprise entre 1 et 3 bars, l'effet de refroidissement de la goutte de métal peut être avantageusement atténué.

De plus, les dimensions particulières adoptées pour la tache focale permettent l'introduction d'une grande quantité du gaz de travail à l'intérieur de la saignée, engendrant par conséquent une augmentation de son énergie cinétique, cette dernière pouvant alors atteindre une valeur sensiblement similaire à celle obtenue avec des pressions importantes, telles que 10 à 20 bars. Dans une telle configuration, le gaz en quantité importante rencontre donc moins de difficultés à s'introduire jusqu'au fond de la saignée afin d'expulser l'ensemble des particules métalliques en fusion hors de cette saignée.

Enfin, il est précisé que cette caractéristique particulière de dimension de tache focale provoque un éloignement des parois de la saignée l'une de l'autre, diminuant alors fortement le problème de viscosité du métal fondu. Les particules métalliques en fusion sont alors susceptibles de s'écouler plus facilement que dans des saignées de largeur inférieure.

Avec un tel procédé selon l'invention, l'ensemble des avantages combinés décrits ci-dessus offrent donc la possibilité d'une part de découper des pièces d'épaisseur importante à des vitesses élevés sans laisser subsister d'attaches résiduelles, et d'autre part d'obtenir une qualité de découpe accrue par rapport aux réalisations de l'art antérieur.

Pour améliorer l'évacuation du métal fondu hors de la saignée, il des particules solides sont introduites dans le flux de gaz de travail.

De façon avantageuse, cette introduction de particules solides permet d'engendrer une augmentation de l'énergie cinétique du gaz de travail, sans provoquer l'effet de refroidissement de la goutte liquide qui aurait pu être observé dans le cas d'une augmentation de l'énergie cinétique procurée par un accroissement de la pression d'injection du gaz de travail. Par ailleurs, l'adjonction de ces particules solides s'est avérée extrêmement positive en termes d'accroissement de la vitesse de découpe, d'amélioration du faciès de la découpe, ou encore d'accroissement de l'épaisseur découpée à paramètres constants.

Préférentiellement, les particules solides sont constituées par au moins une poudre métallique. A cette égard, notons qu'il peut s'agir d' une ou plusieurs poudres métalliques prises parmi des poudres lourdés à hauts points de fusion, telles que le tungstène ou le molybdène.

De préférence; le faisceau laser comprend un angle de convergence ∝ inférieur à environ 10°, en sortie des moyens optiques.

Selon cette réalisation préférée de l'invention, l'avantage découlant consiste en la possibilité de disposer d'un faisceau focalisé se réfléchissant sur les parois de la saignée sur toute l'épaisseur de la pièce, même lors de la découpe de pièces de grandes dimensions. A l'aide d'une telle caractéristique, on peut alors effectuer des travaux de découpe dans un large domaine d'épaisseur de pièce, sans modifier les positions respectives de la tête du dispositif de découpe utilisé et de la pièce à découper.

Enfin, cette disposition particulière permet d'effectuer la découpe de pièces pleines de grande épaisseur, mais également de pièces creuses. La découpe de pièces creuses peut alors s'effectuer sans suivre le contour de cette pièce, mais en réalisant des passages découpant plusieurs faces de la pièce à la fois. A titre d'exemple, un tube creux de section carrée peut être découpé entièrement en faisant passer le dispositif de découpe devant une seule face, alors que selon l'art antérieur, il était nécessaire de faire passer le dispositif de découpe devant chacune des quatre faces de ce tube.

Préférentiellement, la tache focale du faisceau laser se situe sur une surface supérieure d'une pièce à découper, et s'étend également sur une distance comprise entre environ 40 et 60 mm avant de traverser les moyens optiques. Cette dernière spécificité participe de façon non négligeable à la réduction de l'encombrement et du coût du dispositif.

Enfin, la tête est apte à être déconnectée du dispositif à l'aide de moyens pilotables à distance.

D'autres caractéristiques et avantages de l'invention apparaîtront dans la description détaillée, non limitative, ci-dessous.

### BRÈVE DESCRIPTION DES DESSINS

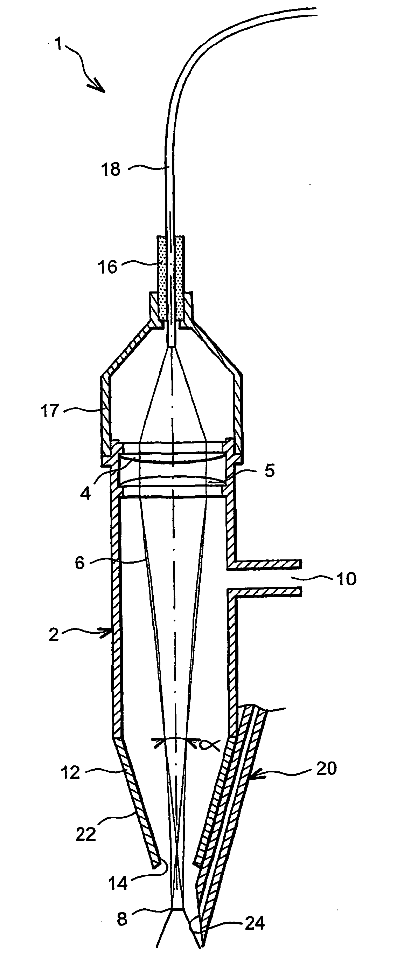

La description sera faite au regard de la figure unique annexée, représentant une vue schématique d'un dispositif pour mettre en oeuvre un procédé selon un mode préféré de réalisation de l'invention.

### EXPOSÉ DÉTAILLÉ D'UN MODE DE RÉALISATION PRÉFÉRÉ

En référence à la figure unique, on voit un dispositif 1 de découpe laser selon un mode de réalisation préféré de la présente invention. Le dispositif 1 met en oeuvre un laser du type Nd-YAG, retenu notamment en raison des avantages liés au transport d'un faisceau laser 6 par fibres optiques ou encore en raison des avantages procurés concernant la possibilité de disposer d'une meilleure interaction entre ce faisceau laser 6 et une pièce à découper. Notons cependant qu'il serait tout à fait approprié d'utiliser un laser CO₂ pour mettre en oeuvre l'invention.

L'invention est destinée à être utilisée pour découper des pièces d'épaisseurs variées, et plus spécifiquement pour des pièces dont l'épaisseur est supérieure à environ 50 mm et pouvant aller au-delà de 100 mm. En tout état de cause, l'invention propose un procédé de découpe laser pour des pièces d'épaisseur importante, la limite communément admise par l'homme du métier étant de 10 mm.

De même, la puissance délivrée au dispositif 1 se situe entre environ 4 et 6 kW, cet intervalle de valeur correspondant à la puissance habituellement utilisée dans les dispositifs de l'art antérieur.

Le dispositif 1 comprend une tête 2 de forme sensiblement cylindrique, comprenant un diamètre extérieur d'environ 30 mm et une longueur d'environ 250 mm, pour une puissance administrée de 6 kW. Les valeurs des dimensions sont celles retenues pour un mode préféré de réalisation de l'invention, l'homme du métier étant naturellement en mesure de les adapter suivant la puissance fournie au dispositif 1, sans sortir du cadre de l'invention.

A l'intérieur de la tête 2 du dispositif 1, se situent des moyens optiques 4,5, de préférence constitués par une lentille de collimation 4 et une lentille de convergence 5, ces lentilles étant situées en regard l'une de l'autre.

Les moyens optiques 4,5 sont traversés par le faisceau laser 6, transporté par un câble 18 de fibres optiques. Ce câble 18 est supporté par un ensemble mécanique 16,17 comprenant un connecteur 16 enveloppant le câble 18 et une interface mécanique 17 portant ce connecteur 16. L'interface mécanique 17 est également couplée à la tête 2 du dispositif 1, de manière à positionner le faisceau laser 6 sortant du câble 18 en regard des moyens optiques 4,5.

De préférence et en particulier pour limiter l'encombrement du dispositif 1, le faisceau laser 6 s'étend à l'intérieur de l'ensemble mécanique sur une distance d'environ 40 à 60 mm. Bien entendu, cet intervalle de valeur n'est pas restrictif et peut être modifié par l'homme du métier.

Les moyens optiques 4,5 traversés par le faisceau laser 6 produisent une tache focale 8, cette tache focale 8 correspondant approximativement à une largeur d'une saignée effectuée dans une pièce à découper (non représentée) lors de l'utilisation du dispositif 1. Cette tache focale 8 dispose d' un diamètre pouvant aller d'environ 1,5 mm à environ 3 mm.

La tête 2 du dispositif 1 comprend de plus une buse 12 apte à laisser passer le faisceau laser 6 à travers un orifice de sortie 14, cet orifice de sortie 14 ayant un diamètre légèrement supérieur ou égal au diamètre de la tache focale 8. En d'autres termes, pour des raisons liées aux performances du dispositif 1, le diamètre de l'orifice de sortie 14 de la buse 12 a une valeur voisine du diamètre de la tache focale 8.

La tête 2 du dispositif 1 comprend en outre des moyens d'injection 10 d'un gaz de travail dans la tête 2, ce gaz de travail étant éjecté de façon coaxiale au faisceau laser 6, par l'intermédiaire de la buse 12 à une pression comprise entre environ 1 et 3 bars. Ces valeurs se démarquent considérablement de l'art antérieur où le gaz de travail est éjecté à des pressions beaucoup plus importantes, de l'ordre de 10 à 20 bars. La raison de l'emploie d'une telle pression est d'éviter que des particules métalliques en fusion se situant dans la saignée soient refroidies et bloquées avant leur expulsion de la saignée. Il est donc nécessaire d'appliquer des pressions faibles, permettant tout de même au gaz d'effectuer son rôle d'éjecteur de particules métalliques en fusion. A titre d'exemples non limitatifs, le flux gaz de travail éjecté de la buse 12 peut être un gaz neutre du type N₂, Ar ou He, ou encore un gaz réactif du type O₂.

Ainsi, une pression du flux de gaz de travail comprises entre 1 et 3 bars et un diamètre de tache focale 8 compris entre 1,5 et 3 mm assurent une découpe de qualité pour des pièces ayant une épaisseur pouvant aller au-delà de 100 mm.

Toujours à titre d' exemples, pour une pression du gaz de travail fixée à 2 bars, on obtient une découpe de qualité satisfaisante pour une pièce d'une épaisseur de 60 mm lorsque le diamètre de la tache focale 8 est de l'ordre de 1,5 mm, c'est-à-dire lorsque la largeur de la saignée atteint cette même valeur. De même, on obtient de très bons résultats pour une pièce d'épaisseur de 100 mm avec une tache focale 8 de l'ordre de 2, 5 mm En d'autre termes, on se place toujours dans une gamme de diamètre de la tache focale 8 étant largement supérieur à 0,5 mm, valeur recommandée et utilisée dans l'art antérieur.

La tête 2 du dispositif 1 de découpe reçoit le faisceau laser 6 provenant du câble 18 de fibres optiques, ce faisceau laser 6 traversant les moyens optiques 4,5 situés à l'intérieur de la tête 2. Le faisceau laser 6, en sortie de ces moyens optiques 4,5, comprend un angle de convergence ∝ inférieur à environ 10°. La petite valeur de l'angle de convergence ∝ permet au faisceau laser 6 focalisé de se réfléchir sur des parois de la saignée, sur toute l'épaisseur de la pièce à découper, assurant ainsi une bonne découpe de cette dernière.

De préférence, l'angle de convergence ∝ est compris entre 5° et 9°, cet intervalle de valeur se différenciant de l'art antérieur dont les mesures oscillent généralement entre 15° et 30°.

Avec un tel angle de convergence, il n'existe quasiment plus de contraintes liées à l'écartement entre la pièce à découper et le dispositif 1. Ainsi, on remarque que l'on obtient une très bonne qualité de découpe pour un écartement compris entre environ 0,5 et 20 mm.

De plus, il n'est plus nécessaire d'effectuer des mesures précises en ce qui concerne les positions respectives de la tache focale 8 et de la pièce à découper. La tache focale 8 peut donc se situer comme dans l'art antérieur à environ un tiers de l'épaisseur de la pièce, mais également sur une surface extérieure de cette pièce à découper ou à tout autre endroit se situant à proximité. Il est à noter que l'on entend par surface extérieure, la surface de la pièce à découper la plus proche du dispositif 1, c'est-à-dire celle rentrant en premier en contact avec le faisceau laser 6. En adoptant une telle disposition, on accroît donc la tolérance de positionnement de l'extrémité de la tête 2 du dispositif 1 par rapport à la pièce à découper.

Pour augmenter encore davantage les performances de découpe du dispositif 1, ce dernier est conçu afin que des particules solides soient introduites dans le flux de gaz de travail.

En effet, une fois introduites dans le flux de gaz, ces particules solides permettent d'augmenter artificiellement la masse du gaz de travail, et engendrent par conséquent un accroissement de son énergie cinétique, sans pour autant provoquer l'effet de refroidissement décrit précédemment, émanant d'un écoulement du gaz de travail à forte pression.

Les particules solides peuvent ainsi prendre la forme d'une ou plusieurs poudres métalliques mélangées, ces poudres étant préférentiellement lourdes et à hauts points de fusion, telles que le tungstène ou le molybdène.

Pour ce faire, le dispositif 1 de découpe peut comprendre une buse annexe 20, également appelée « buse tandem », apte à introduire les particules solides dans le flux de gaz de travail, après que celui-ci à été éjecté de la buse 12. Bien entendu, il serait également envisageable d'introduire les particules solides dans le flux de gaz de travail avant que ce dernier ait été éjecté de la buse 12 du dispositif 1, sans sortir du cadre de l'invention.

Dans le mode de réalisation préféré de l'invention représenté sur la figure unique, la buse annexe 20 est montée sur la buse 12 d'éjection du gaz de travail, au niveau d'une paroi extérieure 22 de cette dernière, de préférence de forme sensiblement conique. A titre d'exemple, cette buse annexe 20 peut être réglée afin d'autoriser un débit de particules solides compris entre 5 et 20 g/min.

Ainsi, un orifice de sortie 24 de la buse annexe 20 et l'orifice de sortie 14 de la buse 12 sont situés à proximité l'un de l'autre, l'orifice de sortie 24 étant préférentiellement agencé au-dessous et latéralement par rapport à l'orifice de sortie 14 de la buse 12. En d'autres termes, l'orifice de sortie 24 de la buse annexe 20 est placé entre la buse 12 et la pièce à découper, afin que les particules solides puissent intégrer correctement le flux de gaz de travail éjecté de cette buse 12. De cette façon, le mélange constitué de gaz de travail et de particules solides peut facilement pénétrer à l'intérieur de la saignée, afin d'expulser le métal en fusion.

Il est indiqué que les particules solides du type poudres métalliques sont véhiculées à l'aide d'un gaz pouvant être sensiblement identique à celui employé pour constituer le gaz de travail.

Pour mesurer l'amélioration des performances de découpe procurée par l'adjonction des particules solides dans le flux de gaz de travail, des tests comparatifs ont été réalisés. Des tableaux récapitulant les résultats obtenus sont présentés ci-dessous. Il est en outre précisé que pour l'ensemble des essais effectués, la puissance alimentant le laser a été fixée à 6 kW, la pression du flux de gaz de travail (N₂) à 2 bars, et le diamètre de la tache focale 8 à 2 mm.

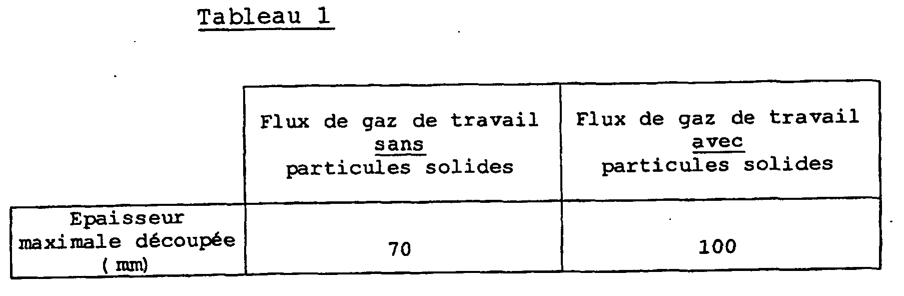

Dans ce premier tableau, on peut apercevoir qu'à paramètres constants, l'introduction de particules solides dans le flux de gaz de travail permet d'augmenter largement l'épaisseur maximale susceptible d'être découpée, un accroissement de 42% de cette épaisseur ayant été observé.

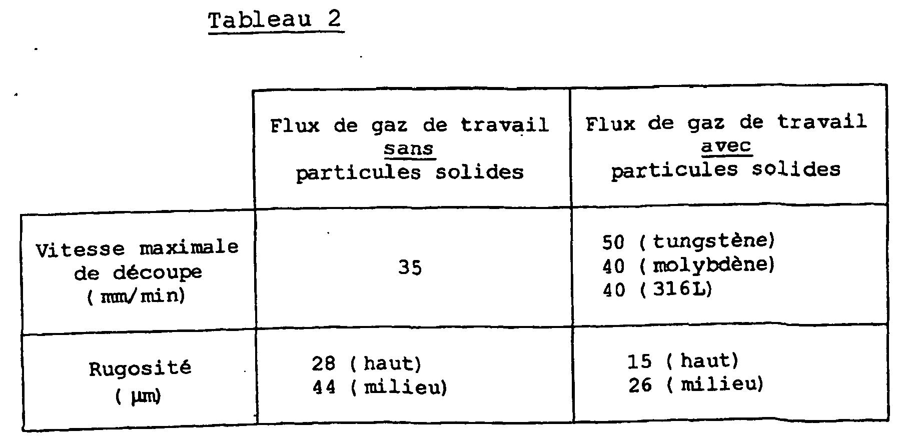

Dans ce second tableau, les essais ont été réalisés sur des pièces d'une épaisseur constante de 60 mm.

En référence à la première ligne, il est tout d'abord indiqué que l'introduction de particules solides dans le flux de gaz de travail permet d'augmenter considérablement la vitesse maximale de découpe ne laissant pas subsister d'attaches résiduelles, avec un accroissement particulièrement intéressant de près de 40% dans le cas de l'utilisation du tungstène.

Par ailleurs, en référence à la seconde ligne de ce second tableau, on peut voir que la rugosité est largement diminuée, aussi bien en haut qu'au milieu de la pièce découpée.

En outre, lors de l'ensemble des tests réalisés, il a également été observé que l'adjonction de particules solides dans le gaz de travail supprimait les défauts de planéité sur la pièce découpée, ces défauts ayant été rencontrés en nombre sur le faciès d'une surface de pièce d'environ 5 mm², lors de la mise en oeuvre d'un flux de gaz dépourvu de particules solides.

D'autre part, le dispositif 1 de découpe est conçus afin que la tête 2 soit susceptible d'être déconnectée du dispositif 1. La déconnexion peut s'effectuer à l'aide de moyens pilotables à distance, comme cela est connu de l'art antérieur. De plus, la tête 2 peut être jetée, ce qui est particulièrement intéressant lors de son utilisation pour le démantèlement d'installations nucléaires. Sa spécificité d'être jetable provient du fait que la tête 2 est de conception simple et donc de faible coût, en particulier grâce à l'absence de système de refroidissement et de systèmes de réglages, tels qu'un système de réglage de positionnement ou encore un système de réglage optique.

L'invention trouve une pluralité d'applications, dont notamment celles relatives au domaine du nucléaire. En effet, ce dispositif 1 peut être utilisé lors du démantèlement d'installations nucléaires. On peut alors citer comme exemples la découpe d'éléments irradiants et/ou contaminés dans une cellule de casse, le démantèlement d'une cellule avec la phase de découpe de toutes ses installations internes ou encore des interventions très spécifiques sur des réacteurs mis à l'arrêt ou accidentés.

En outre, cette invention peut également être utilisée dans l'industrie navale où des tôles épaisses sont largement répandues. L'invention permettrait ainsi de supplanter les techniques de chalumeaux et de torches à plasma traditionnellement employées dans ce domaine.

## Revendications

1. Procédé de découpe laser de pièces d'épaisseur supérieure à 10 mm, le procédé étant mis en oeuvre par l'intermédiaire d'un faisceau laser (6) traversant des moyens optiques (4, 5) produisant une tache focale (8) et par l'intermédiaire d'un flux de gaz de travail dans lequel des particules solides sont introduites, **caractérisé en ce que** le diamètre de la tache focale est compris entre environ 1,5 et 3 mm et **en ce que** le flux de gaz de travail est éjecté à une pression comprise entre environ 1 et 3 bars.

2. Procédé de découpe selon la revendication 1, **caractérisé en ce que** les particules solides sont constituées par au moins une poudre métallique.

3. Procédé de découpe selon l'une quelconque des revendications précédentes, **caractérisé en ce que** le faisceau laser (6), en sortie des moyens optiques (4, 5), comprend un angle de convergence ∝ inférieur à environ 10°.

4. Procédé de découpe selon l'une quelconque des revendications précédentes, **caractérisé en ce que** la tache focale (8) du faisceau laser (6) se situe sur une surface supérieure d'une pièce à découper.

5. Procédé de découpe selon l'une quelconque des revendications précédentes, **caractérisé en ce que** le faisceau laser (6) s'étend sur une résistance comprise entre environ 40 et 60 mm, avant de traverser les moyens optiques.

## Patentansprüche

1. Laserschneidverfahren für Teile mit einer Dicke über 10 mm, wobei das Verfahren durchgeführt wird mit einem Laserstrahl (6), der optische Einrichtungen (4, 5) durchquert, die einen Fokalfleck (8) erzeugen, und einem Arbeitsgasstrom, dem feste Teilchen zugeführt werden,
**dadurch gekennzeichnet, dass** der Durchmesser des Fokalflecks zwischen ungefähr 1,5 und 3 mm enthalten ist, und dass der Arbeitsgasstrom mit einem Druck zwischen ungefähr 1 und 3 bar ausgestoßen wird.

2. Verfahren nach Anspruch 1, **dadurch gekennzeichnet, dass** die festen Teilchen durch wenigstens ein Metallpulver gebildet werden.

3. Verfahren nach einem der vorangehenden Ansprüche, **dadurch gekennzeichnet, dass** der Laserstrahl (6) am Ausgang der optischen Einrichtungen (4, 5) einen Konvergenzwinkel ∝ kleiner als ungefähr 10° hat.

4. Verfahren nach einem der vorangehenden Ansprüche, **dadurch gekennzeichnet, dass** der Fokalfleck (8) des Laserstrahls (6) sich auf bzw. über einer oberen Oberfläche eines zu schneidenden Teils befindet.

5. Verfahren nach einem der vorangehenden Ansprüche, **dadurch gekennzeichnet, dass** der Laserstrahl (6) sich über eine zwischen ungefähr 40 und 60 mm enthaltene Distanz ausbreitet, ehe er die optischen Einrichtungen durchquert.

## Claims

1. Method for the laser cutting of parts having a thickness greater than 10 mm, the method being implemented by means of a laser beam (6) traversing optical means (4, 5) producing a focal spot (8) and using a working gas flow, wherein solid particles are introduced, **characterized in that** the diameter of the focal spot is between approximately 1.5 and 3 mm and **in that** the working gas flow is ejected at a pressure between approximately 1 and 3 bars.

2. Cutting method according to claim 1, **characterized in that** the solid particles are composed of at least one metallic powder.

3. Cutting method according to any one of above claims, **characterized in that** the angle of convergence α of the laser beam (6) at the output from the optical means (4, 5) is less than about 10°.

4. Cutting method according to any one of the above claims, **characterized in that** the focal spot (8) of the laser beam (6) is located on a top surface of a part to be cut.

5. Cutting method according to any one of the above claims, **characterized in that** the laser beam (6) extends over a distance of between about 40 and 60 mm before passing through the optical means.
